Europäisches Patentamt

European Patent Office

Office européen des brevets

(11) Publication number: **0 280 638**
A2

# EUROPEAN PATENT APPLICATION

(21) Application number: 88500017.4

(22) Date of filing: 22.02.88

(51) Int. Cl.⁴: **B 60 R 7/08**

(30) Priority: 25.02.87 ES 8700635
30.03.87 ES 8701037
30.03.87 ES 8701038
30.03.87 ES 8701039
30.03.87 ES 8701040
29.05.87 ES 8701821

(43) Date of publication of application:
31.08.88 Bulletin 88/35

(84) Designated Contracting States:
AT BE CH DE FR GB IT LI LU NL SE

(71) Applicant: Aramburu Maiz, Francisco Javier
Plaza Easo, 4
E-20006 San Sebastian (Giupuzcoa) (ES)

(72) Inventor: Aramburu Maiz, Francisco Javier
Plaza Easo, 4
E-20006 San Sebastian (Giupuzcoa) (ES)

(74) Representative: Herrero Antolin, Julio
HERRERO & ASOCIADOS, S.L. Alcalá, 21
E-28014 Madrid (ES)

(54) Portable umbrella support for vehicles.

(57) The invention relates to a portable umbrella support for vehicles, designed specifically to be established in a suitable position within the vehicle, coupling same, for example, to the backrest or to a side of the front seats, or even to other parts wherein the body of the umbrella support is no obstacle for the occupants.

The umbrella support itself comprises a general hollow and prismatic body, of small width, and open on its base or upper area. Said body is complemented by a sort of clamp or element which, at the same time as holding the said body in an upright position, comprises the means to stiffen the assembly to a suitable part of the vehicle, such as the side of a seat, which stiffening is effected by gripping the edge of the seat, said clamp being provided therefor with a pair of resilient side branches to effect the gripping action, which branches derive from a further midlle branch or bracket, acting as a means for holding the body of the umbrella support.

FIG.3

**Description**

## PORTABLE UMBRELLA SUPPORT FOR VEHICLES

OBJECT OF THE INVENTION

The present invention relates to a portable umbrella support for vehicles, specifically designed to be removably established within a car, such that said umbrella support may be easily removed, either for cleaning same or for emptying the water which may have accumulated therein.

BACKGROUND OF THE INVENTION

There currently exists no vehicle which is provided with an umbrella support, nor is there available an accessory of this type for use in a vehicle.

In the best of cases, there exists trays, either already established as part of the vehicle itself, or constituting accessories which may be subsequently established therein, designed to hold various objects and which may in certain cases also be used to hold a collapsible umbrella.

However, and due to the fact that said trays have not been specifically designed for such purpose, they are only suited for holding certain types of umbrellas, being reduced in size, such that when the umbrella is placed on such trays after use thereof, the water which drips off is forced out of the tray upon braking or other and sudden movements which take place during normal driving of the car, and furthermore, in most cases the umbrella projects laterally from the tray, the water thus dripping outside same.

DESCRIPTION OF THE INVENTION

The umbrella support of the present invention has been designed to fully solve this problem, it being a vehicle accessory designed specifically for this purpose, i.e., for holding the umbrella, although it may likewise be used for holding any other type of elongate object.

Furthermore, said umbrella support has means for ready coupling thereof, preferably to the edge of one of the seats or to any other similar object, such that the water collected therein may be easily emptied outside the car, and, likewise, that same may be cleaned periodically upon coupling from the vehicle and under the best conditions therefor.

More specifically, and in order to achieve the above, the umbrella support being described is comprised by an ostensibly flat prismatic body, which is obviously hollow and open at its upper end, and a basically "U" shaped clamp having resilient arms which, receiving the said prismatic body, project considerably therefrom in order that the said clamp may simultaneously grip the side of the vehicle seat, or any other suitable part thereof, in addition to holding the said prismatic body, the latter thus being held in an upright or practically upright position, with its mouth facing upwards to ensure that the water contained therein cannot be split on normal handling of the car, as well as to prevent displacement of the umbrella or umbrellas housed therein for the same reasons.

As a complement to the structure described, and as a further characteristic of the invention, it has been forseen that the said prismatic body, which is ostensibly flat and vertically elongated, is further provided, in correspondence with its smaller side walls, and, on the upper area thereof, with apertures, making up the mouth of the said body, which ensure the correct positioning of the handle of the umbrella, thereby preventing the lateral displacement of the umbrella, which might constitute a hindrance or obstacle for the person occupying the seat, in the case that the umbrella support is fixed thereto, this usually being the most suitable place therefor.

It has been further foreseen that the said prismatic body is narrower at its lower end, with a trapezial-isosceles profile, this area requiring a smaller size by reason of the fact that it must house only the "tips" of the umbrellas; furthermore, the said narrowing makes assembly thereof within the car easier, for the space available in the lower areas of the car is usually less, given the shape of the car itself.

A further object of the invention consists in the provision, on the base of the umbrella support, of a long, flexible tube which emerges from an aperture provided therefor in the said base, the other end of the tube being held, at a considerable height with respect to the base, on a ring provided therefor on the outer surface of the umbrella stand, such that the water may be evacuated directly to the outside by means of said tube without it being necessary to uncouple the umbrella stand.

In accordance with an alternative embodiment of the invention, the clamp for coupling the umbrella support is provided, on the inner surface of the area of intersection of its central and side branches, with grooves which affect said clamp along the whole of its length and which act as guiding means for the corresponding edges of one of the larger walls of the container, specifically the area defined as a result of the side apertures provided on the upper surface of said umbrella stand.

In accordance with a further alternative of the invention, the clamp is formed as an integral part of the umbrella stand itself, wherefore the vertical or longitudinal edges of one of the larger walls of the umbrella support extend into respective side wings which define the resilient branches of the clamp. In accordance with this alternative embodiment, the independent element comprisedby the clamp is no longer necessary, for it is formed as an integral part of the umbrella support.

In a further alternative embodiment of the invention, the clamp comprises unequal branches, the outer surface of its central branch being provided with a dovetail notch which allows stiffening thereof to the back or front walls of the umbrella stand, the longitudinal or vertical edges of the said walls having being guided in the dovetail notch defined in the central branch of the said clamp.

In yet another embodiment, the coupling means of the umbrella stand are comprised by a surrounding collar having a rectangular shape and being obviously complementary to that of the umbrella stand, one of the larger walls of the said collar extending vertically upwards into a flat, rectangular extension which may be provided either with a set of holes, or with an outer adhesive layer acting as coupling means for the assembly.

The clamp provided with a dovetail notch may be related to the vertical rectangular extension of the said collar to form a coupling unit for the umbrella stand, for this latter will be held by the collar and the assembly coupled at a suitable position by means of the clamp.

A further embodiment is comprised by the fact that the clamp may be provied, on the external surface of its main or central branch, with a projection having widened side edges and designed to fit into a groove made therefor in one of the walls of the umbrella stand.

In accordance with yet another embodiment, the clamp may be comprised by two separate parts, the side branches whereof are stiff, such that an internally threaded tube is provided on the back outer surface of one of the said parts, and engages a likewise threaded shaft which is guided through a tubular element provided on the other part of the clamp. Thus, by screwing the shaft to a greater or lesser extent, the distance between the two parts of the clamp may be adjusted, and thus also the pressure with which it is coupled into place, with the particularity that the part of the clamp on which the threaded tube is fitted has a small projection which emerges from the said tube and ends in a widened head which fits into the likewise widened section of the groove provided on both the front and back surfaces of the umbrella stand.

This last embodiment affords a clamp which may be adapted to the width of any element to which the assembly may be coupled, whether it is to the side of a seat rest or any other accessory, for, in accordance with the width thereof, the clamp may be opened or closed further simply by screwing the threaded shaft of one of the parts of the clamp into the tube provided on the other to a lesser or greater extent, thereby obtaining a clamp of adjustable width.

In accordance with a further embodiment, the front and back surfaces project on both sides into respective coplanar flanges which extend practically from the point at which the the umbrella stand starts to grow narrower, to the upper edge of said front and back surfaces, constituting guiding means for the corresponding clamp, which in this embodiment forms the guides as an integral part of its outer surface, i.e., as an extension of its side branches, on surpassing its confluence with the main or central branch.

finally, in a last embodiment, the clamp constitutes part of a rectangular collar which houses the body of the umbrella support itself, the latter being provided with an external thickening at the upper edges of its larger surfaces, which determine maximum displacement of the umbrella stand as regards the collar on which it shall be housed.

Said thickenings may likewise be located approximately halfway up.

DESCRIPTION OF THE DRAWINGS

The object of the invention, as well as the various preferred embodiments thereof, will be described with respect to the set of drawings which is attached hereto, where the following has been shown in an illustrative and non-limiting manner:

Figure 1.- Is a perspective view of a portable umbrella stand for vehicles, in accordance with the object of the present invention.

Figure 2.- Ia a profile view of the clamp or bracket which takes part in said umbrella stand.

Figure 3.- Is an example of a practical assembly of the said umbrella stand duly coupled to the side of the seat of a vehicle.

Figure 4.- Is a perspective view of the umbrella support shown in the preceding figures, some being provided with flexible outlet tube and the coupling bracket or clamp coupled in a manner different to that shown in figures 1 and 3.

Figure 5.- Is a perspective view of an umbrella stand in accordance with the object of the invention, similar to those of the preceding figures, but the clamp or bracket being made as an integral part of the umbrella stand itself.

Figure 6.- Is a different embodiment of the holding clamp or bracket.

Figure 7.- Shows the clamp of the preceding figure, applied on the umbrella support itself.

Figure 8.- Is a different embodiment of the clamp itself, which in this case comprises a rectangular collar from one of the larger surfaces whereof there projects a likewise rectangular extension, the umbrella stand being housed within said collar.

Figure 9.- Is a side view of the collar shown in the preceding figure, with the corresponding vertical and rectangular extension.

Figure 10.- Is a perspective view of the umbrella support related to the coupling element comprised by the collar shown in figures 8 and 9.

Figure 11.- Is a perspective view of the collar shown in the three preceding figures related to the clamp or bracket shown in figure 6, both elements constituting the means of support for the umbrella stand and the coupling means of the assembly to, for example, the side edge of a seat of a vehicle.

Figure 12.- Is a further embodiment of the clamp or bracket which is provided, in this case, with a projection being complementary to the outer surface of the central branch of the clamp.

Figure 13.- Is a perspective view of the umbrella stand related to the coupling clamp or bracket shown in figure 12.

Figure 14.- Is a further alternative embodiment of the clamp, which in this case comprises two parts which are joined to each other by means of a threaded element which allows adjustment of the distance between said two parts, and thus adjustment of the clamp or bracket to greater or smaller widths of the parts to which same must be coupled.

figure 15.- Is a further embodiment of the umbrella support with the corresponding clamp or bracket related thereto.

Figure 16.- Is a plan view of the bracket related to the umbrella stand shown in the preceding figure.

Figure 17.- Is a further embodiment of the umbrella support showing the thickened external upper edges of its larger branches, defining abutments to prevent uncoupling of the collar and clamp from the umbrella stand.

Figure 18.- Is a perspective view of the collar and clamp for use with the umbrella stand shown in figure 17.

Figure 19.- Is, finally, a plan view of the collar and clamp shown in the preceding figure.

## DESCRIPTION OF THE PREFERRED EMBODIMENTS OF THE INVENTION

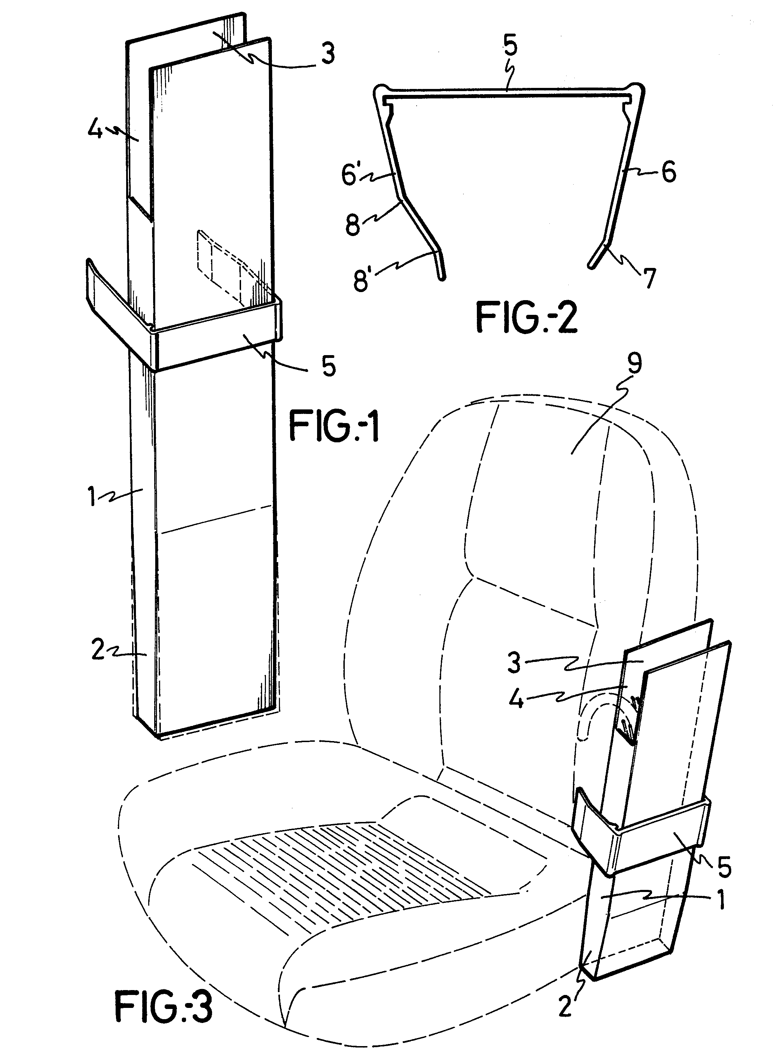

In the light of figures 1 to 3, it may be seen that the umbrella stand object of the invention comprises a container body 1, of a bascially prismatic and rectangular shape, vetically elongated and ostensibly flat, which is preferably provided with a lower sector 2 converging slightly towards its base and defining an inverted and considerably stylized trapezial-isosceles profile whereas the upper mouth 3 thereof extends to the upper end area 4 of its smaller side walls.

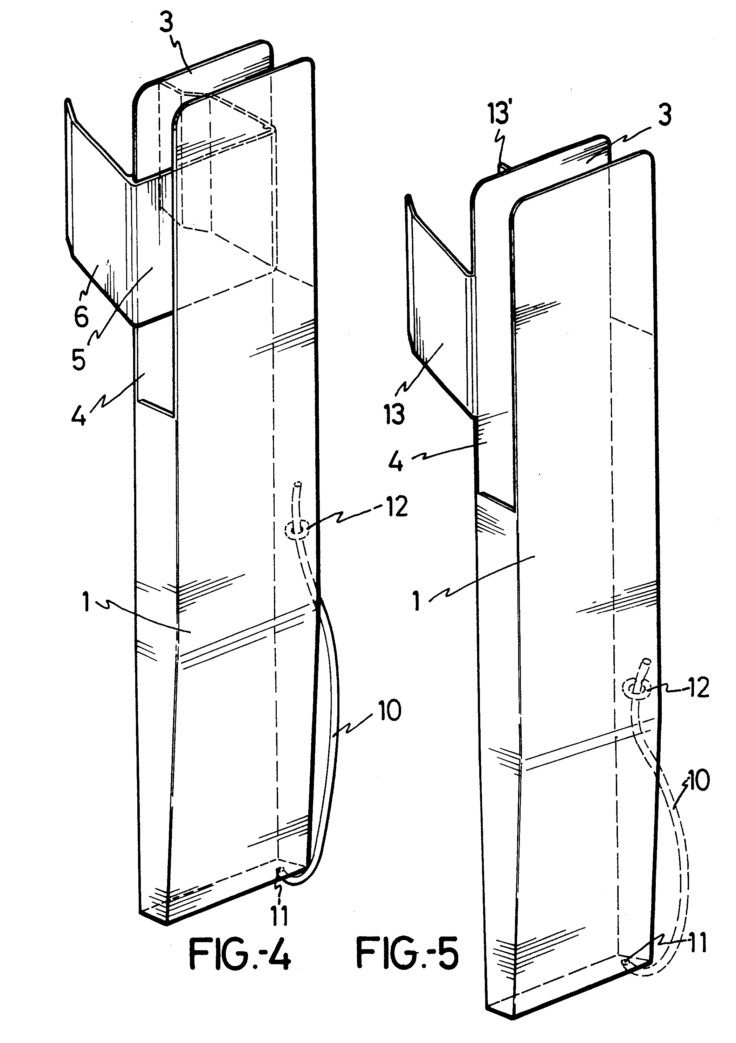

Prismatic body 1 is complemented with a clamp or bracket 5, a preferred profile whereof is shown in figure 2, the said clamp or bracket 5 being approximately "U" shaped, although side branches 6-6' thereof converge ostensibly and adopt a special configuration, namely an obtuse bend 7 in one of the branches thereof and two opposed obtuse bends 8-8' in the other, which bends determine optimumcoupling of the end area of the branches of said clamp to the side of back rest 9 of one of the seats of the vehicle, as shown in figure 3, such that prismatic body 1 is held at the back of clamp 5, whilst the projecting section of branches 6-6' thereof grip the side of the back rest 9 firmly by means of resilient deformation of the said branches.

Resilient deformation of the clamp, and specifically of branches 6-6' thereof, holds prismatic body 1 in place and determines coupling of the assembly to the backrest. In fact, in the light of figure 2, it may be deduced that a first sector is defined in branches 6-6', specifically up to obtuse bend 8, the branches being parallel when the prismatic body 1 is established therebetween, the said branches narrowing beyond said body 1, in order to grip the back rest 9 or other support element.

The pressure exerted by the clamp on prismatic body 1 may be enough to maintain the latter in an upright position, although assembly shall obviously be effected such that the lower closed base of body 1 rests on the floor of the vehicle.

In accordance with the structure described and as can likewise be inferred from figure 3, body 1 is arranged sucht that opening 3 thereof points upwards, in order that accidental emptying of the contents thereof or falling of the umbrella or umbrellas housed therein as a result of sudden braking or other movements of the vehicle during driving thereof, are prevented, the said umbrella stand being nevertheless easy to remove, either for emptying the water which may have collected therein, or for periodical cleaning thereof.

Figure 4 shows the same umbrella support which is provided with a flexible tube 10, coupled at one of its ends to a hole 11 made therefor in the lower base of the umbrella stand or container body 1, whereas the other end of flexible tube 10 is held by means of a ring or similar element 12 provided on the outer surface of body 1. The liquid contents of the umbrella stand may be emptied by means of said flexible tube 10, without it being necesary to uncouple same from the seat, simply by directing the free end of the said flexible tube 10 towards the outside of the vehicle. A prompt emptying is likewise achieved by introducing said tube through a hole adequately made therefor in the floor of the vehicle.

Figure 4 likewise shows that clamp 5 is assembled on one of the larger walls or sides of body 1 which are defined as from the point at which the side apertures 4 of the said body are located, the vertical or side edges of the respective larger wall of body 1 being guided by the grooves defined on the inner edges of clamp 5.

Figure 5 shows the same body 1, but in this case the clamp does not constitute a separate element therefor, it being made as an integral part of the said body, for the side branches of the clamp are constituted by respective extensions 13-13' emerging from the side edges of one of the larger walls, in correspondence with the upper mouth of body 1 itself. Said side extensions 13-13' project in exactly the same way as branches 6-6' of the bracket or clamp shown in figure 2, and obviously also the same as that shown coupled to the body in figure 4.

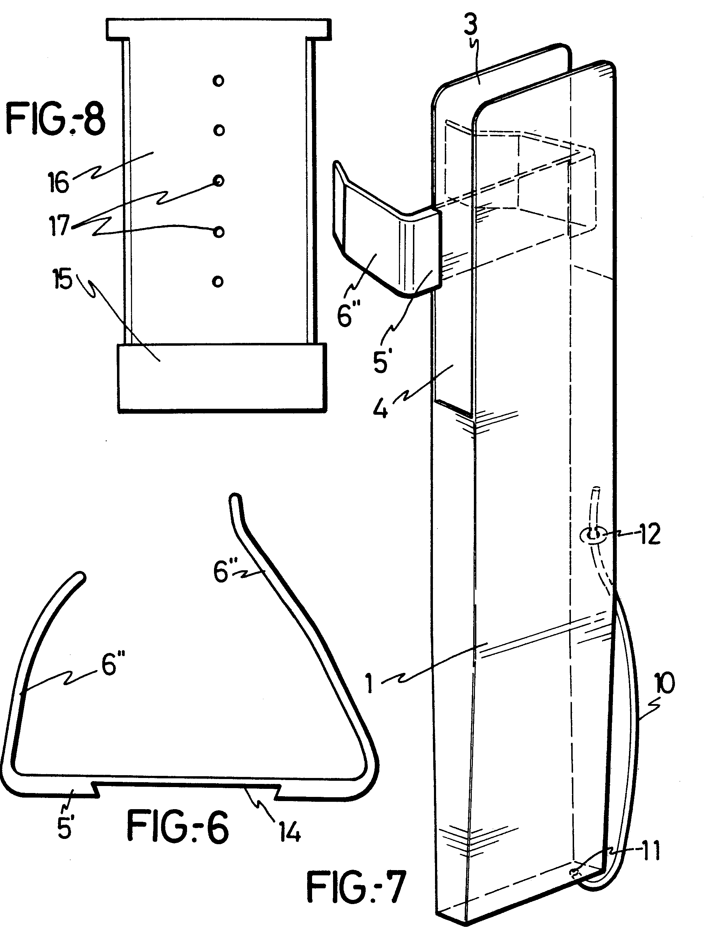

Figure 6 shows a prefered embodiment of the clamp, marked 5', its side branches, marked 6", being identical to those of the clamp shown in figure 2.

Said clamp 5' is provided on the outer surface of its central or middle branch, with a dovetail notch 14 which acts as guide means for the edges of one of the larger walls of body or umbrella stand 1, as shown clearly in figure 7.

In all of these cases the body or umbrella support 1 is held in place by means of the clamp, in the manner shown in figure 3.

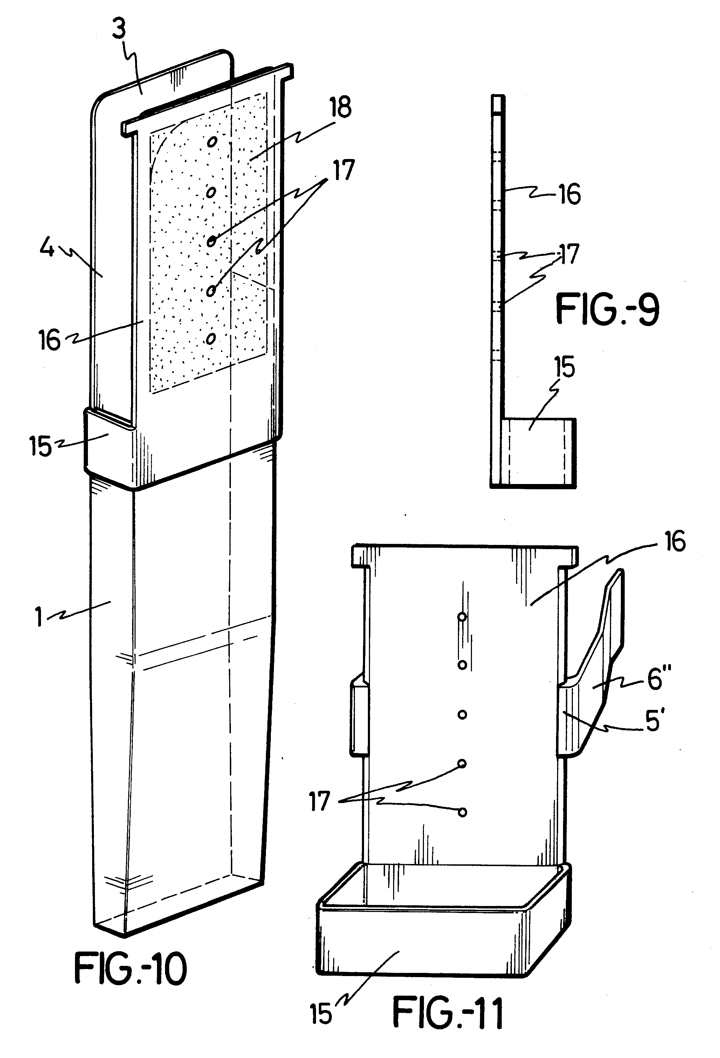

Figures 8 , 9 and 10 show a further means of holding container body 1, in this case with the aid of a collar 15 of rectangular profile, in accordance with the shape of body 1, which collar 15 extends from one of its larger side surfaces into a vertical, rectangular extension 16 provided with holes 17 or with an adhesive layer 18 on its posterior side, such that the umbrella stand contained within the said collar 15 may be coupled onto a suitable area of the vehicle by means of said holes 17 or of adhesive layer 18, figure 10 showing the relationship between body 1 of the umbrella stand and the said collar 15.

Coupling of body 1 of the umbrella stand may obviously be effected by a combination of the two previously mentioned elements, i.e., by means of bracket 5' shown in figure 6 and collar 15 itself, as shown in figure 11, where the side edges of rectangular extension 16 of collar 15 are guided in dovetail 14 of bracket or clamp 5', such that once body 1 of the umbrella stand is arranged within collar 15, the assembly is coupled by means of clamp 5' in like manner as described in previous cases.

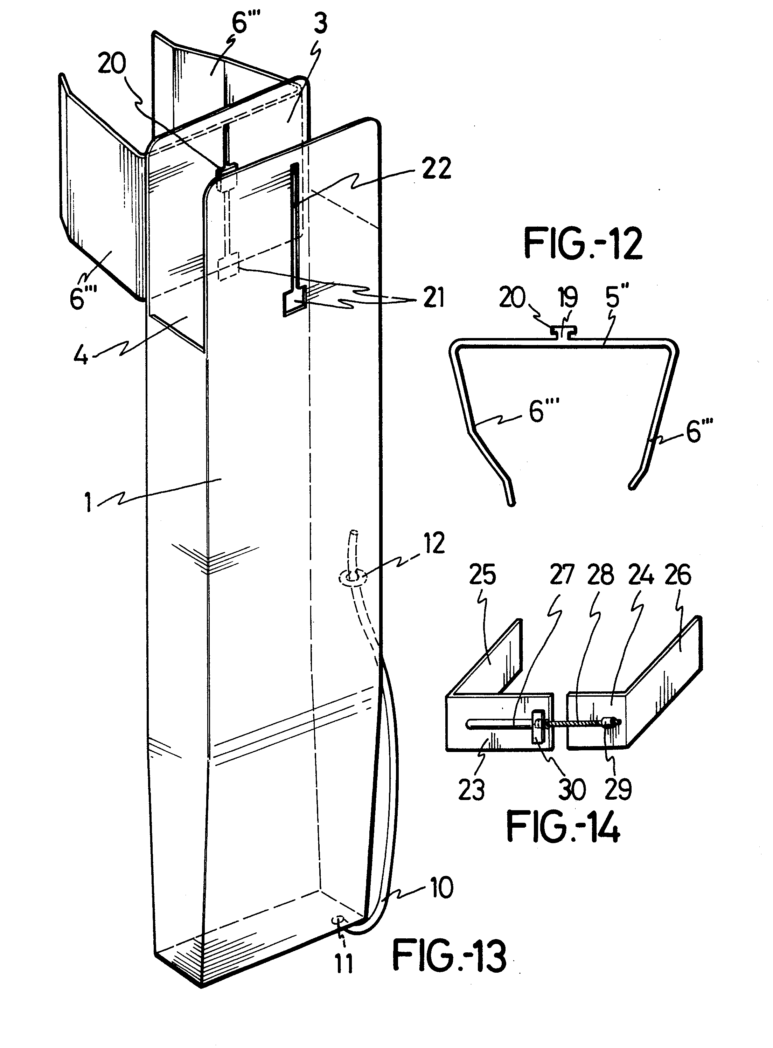

Figures 12 and 13 show an alternative form of coupling body 1 of the umbrella stand. In fact, figure 12 shows a clamp 5'', the side branches 6''' whereof are similar to those of other clamps described previously, i.e., to clamp 5 and 5', with the particularity, in this case, that the middle branch of said clamp or bracket 5'' is provided with projection 19 having a widened head or edges 20 which fits into an aperture 21 made therefor in the larger walls or sides of body 1 of the umbrella stand, as shown in figure 13, which aperture 21 extends into a narrow groove 22 for guiding therein of projection 19. In other words, the larger wall or walls of body 1 are provided with a narrow vertical groove 22, the lower end whereof extends into an aperture 21 which receives the head 20 of the projection 19, this latter thus sliding along groove 22 and body 1 of the umbrella support being consequently suspended from the said projection and linked to clamp or bracket 5'' itself, coupling of the assembly now being effected in the manner described hereinbefore.

In a further embodiment of the clamp, as shown in figure 14, said clamp or bracket is comprised by two separate parts or elements 23 and 24, which may be related to each other, element 23 constituting one of the side branches of the clamp, and element 24 the other, said branches being generally marked 25 and 26.

An internally threaded tube 27 is provided on the back surface of element 23 to receive a threaded shaft 28 which is guided through a tubular section 29 provided on the other element 24 of the clamp.

A small radial projection ending in a widened head 30 emerges from tube 27, near the end which receives threaded shaft 28, which head is slightly separated from said tube 27 due to the projection emerging therefrom, this latter comprising the means for separating the two parts.

In this way, the side branches 25 and 26 of the clamp are stiff, resilient branches not being required due to the fact that the distance between the two is determined by the degree of introduction of the shaft 28 within tube 27, the width of the clamp thus being adjustable.

In accordance with this embodiment shown in in figure 14, for coupling a body 1 to, for example, the side of a vehicle seat, elements 23 and 24 must be placed in a suitable position, shaft 28 being subsequently screwed such that the side branches 25 and 26 move close to each other and press against the place in question. Screwing of shaft 28 will be effected by means of a suitable implement or tool, such as, for example, a screwdriver, which acts on the free end of said shaft, wherefor some must be suitably shaped at its free end to allow the use of said implement.

The clamp assembly thus formed is joined to body 1 of the umbrella stand simply by introducing widened head 30 of said clamp through widened end parts 21 of each of grooves 4 of body 1, shown in figure 13, and slide the projection separating said head 30 from tube 27 along the corresponding groove 21, body 1 or umbrella support thereby being linked to the said clamp.

Obviously, the linking means of the said two elements 23 and 24 may be any, as a specific means or system for linking the two parts has been shown in the embodiment described, which does not mean to say that any other conventional system may not be used, as what is important is that the clamp comprise in this case two parts which defined stiff side branches, and which parts may be linked to each other with a greater or lesser opening of the clamp itself.

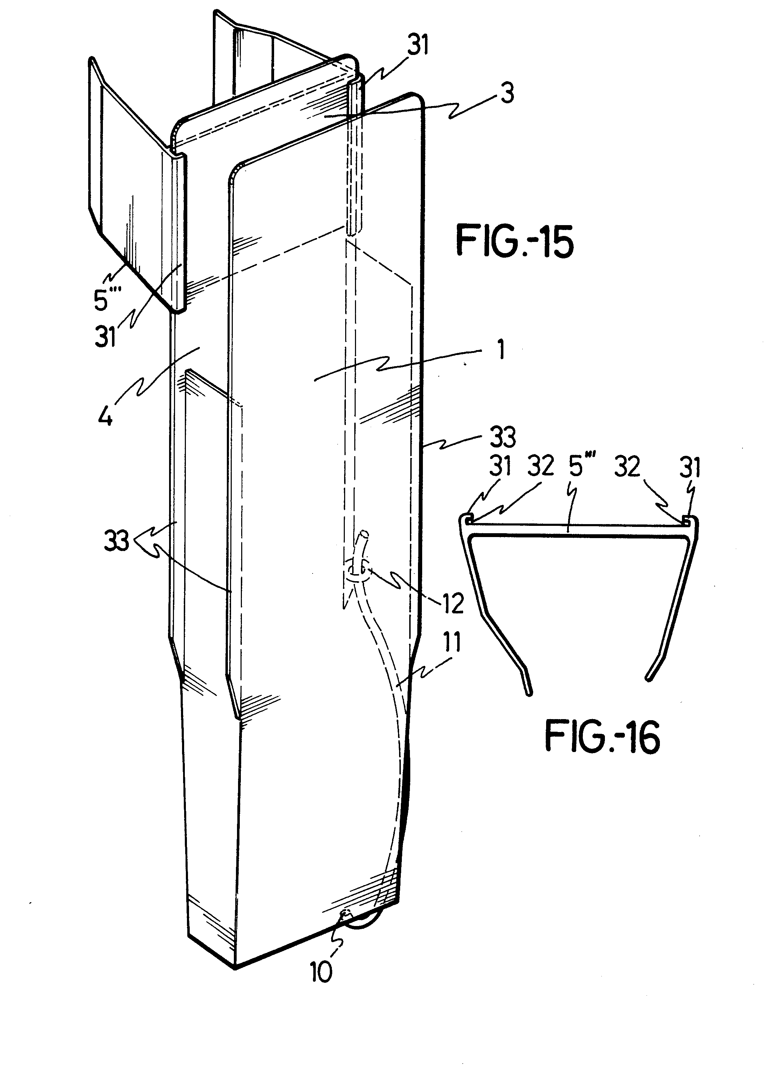

Figures 15 and 16 show a further embodiment wherein the corresponding clamp 5''' is provided with side branches similar to those shown in clamps 5, 5' and 5'', with the particularity that, in this case, the said clamp or bracket 5''' has bends 31 extending in opposition in connection with the ends of what is deemed as main branch, forming respective guides 32 to link same to the corresponding body 1 of the umbrella stand, which, as shown in figure 15, has the particularity that the larger walls or sides extend into coplanar lugs 33, which start from the lower converging arear of body 1 itself, and projects upwards to the upper part or edge itself. That is, the said larger sides of body 1 of the umbrella support surpass the plane of the smaller side surfaces, and through the side or vertical edges formed by lugs or extensions 33 are driven the previously mentioned guides 32, and which correspond to clamp or bracket 5''' itself, as may be seen clearly in figure 15.

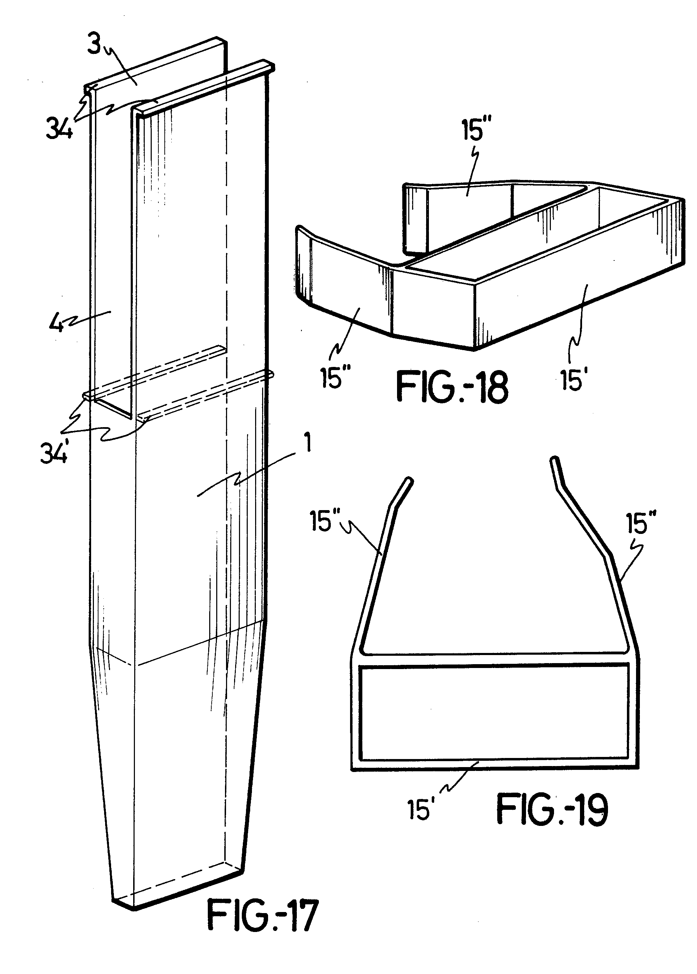

Finally, figures 17, 18 and 19 show a last embodiment wherein body 1 or the umbrella stand is provided on the upper edge of the larger surfaces thereof with an outer thickening 34 which establishes an abutment for a collar 15' similar to the one shown in figures 8, 9, 10 and 11, but in this case collar 15', instead of having extension 16 described for collar 15, is provided with the corresponding side branches 15'' which constitute the clamp or bracket itself, which branches 15'' are evidently similar to branches 6, 6', 6'' and 6'''.

In accordance with this embodiment, body 1 of the umbrella support will be introduced in collar 15' such that body 1 may not be freed therefrom, as it will meet outer ribs 34 of the periphery of collar 15 itself.

Said ribs 34 are approximately halfway up body 1, outer ribs 34' being shown as dotted lines when they are provided, as has been said, approximately at an intermediate area.

In all the embodiments, what is being claimed is an umbrella support comprised by a container body 1 having the shape which has already been described, and which is linked to a further element which is capable of holding it in a suitable place for its purpose and which may be a "U" shaped clamp, having resilient arms, or else by means of a collar or two independent elements forming the clamp itself, as has been described in the present Specification, or an element holding same, by means of an adhesive layer, screws or staples, to any part of the inside of the vehicle, allowing in all cases body 1 of the umbrella stand to be withdrawn from where it is correspondingly being held for cleaning thereof, emptying of the liquid it might contain, which liquid could even be evacuated through the flexible tube shown in some of the embodiments.

## Claims

1.- Portable umbrella support for vehicles, essentially characterised in that it comprises a vertically elongated body, which is hollow and open on its upper end, complemented by a basically "U" shaped clamp or bracket, having resilient side arms, which arms are provided long enough in order that, after the container body has been established within said clamp, they project considerably thereform in order to allow simultaneous gripping of the element of the vehicle forseen to hold the umbrella stand, which is preferably a side edge of the back of one of the seats.

2.- Portable umbrella support for vehicle, in accordance with claim 1, characterised in that said container body is of a basically prismatic and rectangular shape, vertically elongated and flat laterally, said body further being provided with a profile, the lower sector whereof grows narrower towards its base, whereas the upper mouth extends to the upper end area of its smaller side walls.

3.- Portable umbrella support for vehicles, in accordance with preceding claims, characterised in that the clamp is basically "U" shaped, the middle branch whereof is coincident with the width of the container body, has ostensibly converging side branches at the starting area thereof to be resiliently deformed towards a parallel position when the said body is established therein, while the end areas thereof projecting from said body, have obtuse bends or inflexions in order to adequately grip the profile of the edge of the backrest of the seat.

4.- Portable umbrella support for vehicles, in accordance with preceding claims, characterised in that the clamp has, on the inner part and part of confluence between the side branches and the main or transversal branch, respective grooves opposed to each other and defining a guide to house and correspondingly retain one of the larger walls of the container body constituting the umbrella stand.

5.- Portable umbrella stand for vehicles, in accordance with preceding claims, characterised in that the clamp is an integral part of the umbrella stand is an integral part of the umbrella stand itself, its gripping side branches being constituted by two extensions emerging from the side edges of one of the larger walls of the body of the umbrellas stand, which extensions form the said resiliently deformable branches which hold the assembly on the side edge of the back of one of the seats of th car, or on any other holding element.

6.- Portable umbrella support for vehicles, in accordance with preceding claims, characterised in that the clamp is provided in correspondence with the outer surface of its main or transversal branch, with a dovetail-shaped notch to adjust and stiffen a collar which can firmly house within it the container body constituting the umbrella stand, which collar extends in correspondence with one of its larger surfaces into a broad rectangular extension projecting vertically upwards and through which stiffening to the dovetail takes place.

7.- Portable umbrella support for vehicles, in accordance with claim 6, characterised in that coupling of the container body comprising the umbrella stand is effected directly by means of the clamp when one of the larger front or back walls of the body itself is established in the dovetail itself.

8.- Portable umbrella support for vehicles, in accordance with claims 6 and 7, characterised in that coupling of the container body comprising the umbrella support is effected directly by means of the collar, without the aid of the clamp, same being held to the corresponding element by means of assistant screws through holes made therefor in the rectangular extension of the collar, which coupling may likewise be effected by means of an adhesive layer provided in the front surface of the said rectangular extension of the said collar.

9.- Portable umbrella support for vehicles, in accordance with claims 1 and 2, characterised in that the front and back walls of the container body comprising the umbrella support, and in correspondence with an upper area thereof, have been provided with a vertical and narrow groove which is ostensibly wider at its lower end to define a means capable of allowing entry of the head of a projection which emerges from the back end of the clamp, in order that the said projection, once the head thereof has been introduced into the widened area of the groove, mat slide along there in order to link the clamp itself to the container comprising the umbrella support.

10.- Portable umbrella support for vehicles, in accordance with the preceding claim, characterised in that the clamp has stiff side wings and comprises two separate elements which may be related to each other, one of them having been provided on its back surface, with a tube innerly threaded, and stiffened thereto, which will receive a likewise threaded shaft, guided through a tubular section likewise provided on the back surface of the other element such that lesser or greater introduction of the said shaft into the threaded tube will entail lesser or greater closeness between each of the elements comprising the clamp, with the particularity that the tube is further provided with a projection radially and externally emerging therefrom, which projection ends in a widened head which will pass through the widened area of the grooves provided on the front and back walls of the container body, to link the clamp to said body.

11.- Portable umbrella support for vehicles, in accordance with claims 1, 2 and 3, characterised in that the larger walls of the container body comprising the umbrella stand, extend in the same plane to respective side lugs, surpassing the plane of the side walls themselves, which lugs affect the upper area between the part where the lower converging area of the container body begins, projecting upwards to the upper edge itself of said larger walls, and said lugs comprising the guide means during upward and downward sliding of the clamp with respect to the container body.

12.- Portable umbrella support for vehicles, in accordance with the preceding claim, characterised in that the clamp is provided, in correspondence with the rims formed between the main branch and the side branches thereof, with two outer grooves which define guides to house and adjust the side lugs of the container body of the umbrella support.

13.- Portable umbrella support for vehicles, in accordance with claim 1, characterised in that the side arms or branches of the clamp project from the side walls of a rectangular collar comprising the holding means of the container body itself of the umbrellas support when same is placed therewithin and is held in an upright position, and leans on the floor itself od the vehicle in question, the upper edges of the opening of said container body having external ribs which forms tops for maximum displacement of the container body itself as regards the collar of the clamp.

14.- Portable umbrella support for vehicles, in accordance with the preceding claim, characterised in that the external ribs of the larger walls of the container body are approximately halfway up said body.

15.- Portable umbrella support for vehicles, in accordance with any of the preceding claims, characterised in that the lower or narrow part of the container body may be defined by the convergence towards the lower base of its four surfaces, which convergence affects lower section of said surfaces.

16.- Portable umbrella support for vehicles, in accordance with any of the preceding claims, characterised because the end of a flexible tube is coupled on to a hole made in the lower base of the container body, the free end of which tube passes through a hole operatively made in the floor of the vehicle, or is held at a considerably greater height by a suitable means provided on the surface or external area of the said body, through which tube may be emptied the liquid contents, without having to move the body of the umbrella stand.

0280638

FIG.-2

FIG.-1

FIG.-3

FIG.-4  FIG.-5

0280638

FIG:8

16

17

15

FIG:7

3

6"

5'

4

1

12

10

11

6"

6"

6"

5'

FIG:6

14

0280638

FIG.-10

FIG.-9

FIG.-11

0280638

6'''  3
20

22

FIG.-12

6'''
4
21

20  19  5''

6'''
6'''

1

12

25  27  28  24  26

23  30  29

FIG.-14

10

11  FIG.-13

J280638

FIG.-15

FIG.-16

FIG.-17

FIG.-18

FIG.-19